# EUROPEAN PATENT APPLICATION

(11) **EP 4 317 952 A1**
(43) Date of publication of application: **07.02.2024**
(21) Application number: 23185032.2
(22) Date of filing: 12.07.2023
(51) Int. Cl.: G01N 21/65, G01J 3/44

(54) **MICROSCOPIC RAMAN DEVICE**

(30) Priority: 03.08.2022 JP 2022123890
(71) Applicant: Shimadzu Corporation, Nakagyo-ku, Kyoto-shi, Kyoto 604-8511 (JP)
(72) Inventor: TAO, Tomoyo, Kyoto-shi, Kyoto (JP)
(74) Representative: Müller-Boré & Partner Patentanwälte PartG mbB

(57) **Abstract**

A microscopic Raman device includes: a first laser light source (11) that generates first laser light; a second laser light source (12) that generates second laser light having a wavelength different from a wavelength of the first laser light; a first optical element (21); a second optical element (22); a third optical element (31); a fourth optical element (32); and a spectrometer (60). When the first laser light is reflected by the first optical element (21) and passes through the third optical element (31) to irradiate a sample (S), first Raman scattered light is generated from the sample. When the second laser light is sequentially reflected by the second optical (22) element, the fourth optical element (32), and the third optical element (31) to irradiate the sample (S), second Raman scattered light is generated from the sample. The first Raman scattered light passes through the third optical element (31) and the first optical element (21) to enter the spectrometer (60). The second Raman scattered light is sequentially reflected by the third optical element (31) and the fourth optical (32) element and passes through the second optical element (22) to enter the spectrometer (60).

## Description

### CROSS REFERENCE TO RELATED APPLICATIONS

This nonprovisional application is based on Japanese Patent Application No. 2022-123890 filed on August 3, 2022 with the Japan Patent Office, the entire contents of which are hereby incorporated by reference.

### BACKGROUND OF THE INVENTION

### Field of the Invention

The present disclosure relates to a microscopic Raman device.

### Description of the Background Art

For example, Japanese Patent Laying-Open No. 10-90064 discloses a microscopic Raman device. The microscopic Raman device described in Japanese Patent Laying-Open No. 10-90064 has an excitation laser, a spectrometer, and a detector. In the microscopic Raman device described in Japanese Patent Laying-Open No. 10-90064, when a sample is irradiated with laser light from the excitation laser, Raman scattered light is generated from the sample. The Raman scattered light is dispersed by the spectrometer, and the intensity distribution of the dispersed Raman scattered light is detected by the detector.

### SUMMARY OF THE INVENTION

A microscopic Raman device may employ an optical element that reflects laser light generated from a laser light source and that allows Raman scattered light generated when a sample is irradiated with the laser light to pass therethrough. In the case where such a microscopic Raman device has a plurality of laser light sources, switching needs to be made for the optical element when making switching for a laser light source to be used. Upon the switching, the optical axis of the optical element may be deviated.

A microscopic Raman device provided in the present disclosure is a microscopic Raman device in which an optical axis of an optical element can be prevented from being deviated due to the optical element being switched in response to switching of a laser light source.

A microscopic Raman device of the present disclosure includes: a first laser light source that generates first laser light; a second laser light source that generates second laser light having a wavelength different from a wavelength of the first laser light; a first optical element; a second optical element; a third optical element; a fourth optical element; and a spectrometer. When the first laser light is reflected by the first optical element and passes through the third optical element to irradiate a sample, first Raman scattered light is generated from the sample. When the second laser light is sequentially reflected by the second optical element, the fourth optical element, and the third optical element to irradiate the sample, second Raman scattered light is generated from the sample. The first Raman scattered light passes through the third optical element and the first optical element to enter the spectrometer. The second Raman scattered light is sequentially reflected by the third optical element and the fourth optical element and passes through the second optical element to enter the spectrometer.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram of a microscopic Raman device 100.
Fig. 2 is a schematic diagram of a microscopic Raman device 200.
Fig. 3 is a schematic diagram of a microscopic Raman device 100 according to a modification.
Fig. 4 is a schematic diagram of a microscopic Raman device 300.
Fig. 5 is a schematic diagram of a microscopic Raman device 400.

### DESCRIPTION OF THE PREFERRED EMBODIMENTS

Details of embodiments of the present disclosure will be described with reference to figures. In the figures described below, the same or corresponding portions are denoted by the same reference characters and the same explanation will not be described repeatedly.

### (First Embodiment)

A microscopic Raman device according to a first embodiment will be described. Hereinafter, the microscopic Raman device according to the first embodiment will be referred to as a microscopic Raman device 100.

### <Configuration of Microscopic Raman Device 100>

A configuration of microscopic Raman device 100 will be described below.

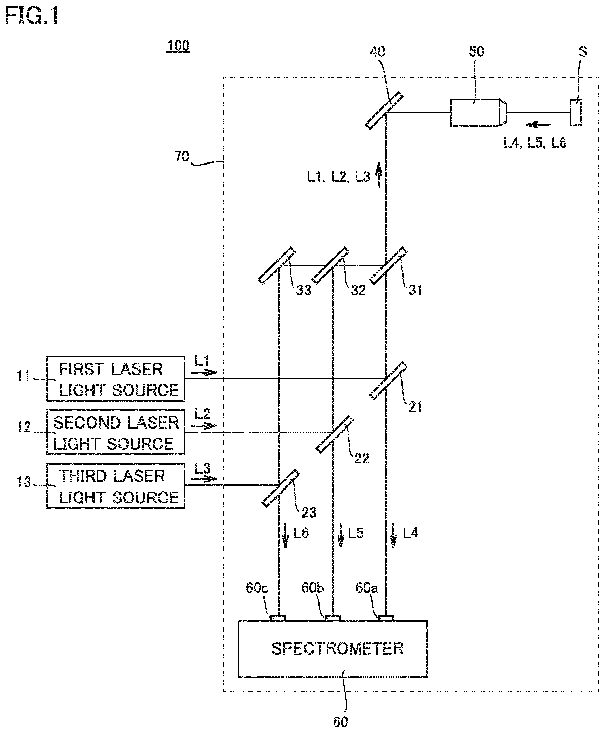

Fig. 1 is a schematic diagram of microscopic Raman device 100. As shown in Fig. 1, microscopic Raman device 100 has a first laser light source 11, a second laser light source 12, and a third laser light source 13, a dichroic beam splitter 21, a dichroic beam splitter 22, a dichroic beam splitter 23, a dichroic beam splitter 31, a dichroic beam splitter 32, a mirror 33, a mirror 40, an objective lens 50, and a spectrometer 60. First laser light source 11, second laser light source 12, third laser light source 13, dichroic beam splitter 21, dichroic beam splitter 22, dichroic beam splitter 23, dichroic beam splitter 31, dichroic beam splitter 32, mirror 33, mirror 40, objective lens 50, and spectrometer 60 are disposed inside a housing 70.

First laser light source 11 generates first laser light L1. The wavelength of first laser light L1 is defined as a wavelength λ1. Second laser light source 12 generates second laser light L2. The wavelength of second laser light L2 is defined as a wavelength λ2. Wavelength λ2 is different from wavelength λ1. Wavelength λ2 is shorter than wavelength λ1, for example. Third laser light source 13 generates third laser light L3. The wavelength of third laser light L3 is defined as a wavelength λ3. Wavelength λ3 is different from wavelength λ1 and is different from wavelength λ2. Wavelength λ3 is shorter than wavelength λ2, for example.

First laser light L1 is reflected by dichroic beam splitter 21. First laser light L1 reflected by dichroic beam splitter 21 passes through dichroic beam splitter 31. First laser light L1 having passed through dichroic beam splitter 31 is reflected by mirror 40. First laser light L1 reflected by mirror 40 passes through objective lens 50 to irradiate sample S.

Second laser light L2 is reflected by dichroic beam splitter 22. Second laser light L2 reflected by dichroic beam splitter 22 is reflected by dichroic beam splitter 32. Second laser light L2 reflected by dichroic beam splitter 32 is reflected by dichroic beam splitter 31. Second laser light L2 reflected by dichroic beam splitter 31 is reflected by mirror 40. Second laser light L2 reflected by mirror 40 passes through objective lens 50 to irradiate sample S.

Third laser light L3 is reflected by dichroic beam splitter 23. Third laser light L3 reflected by dichroic beam splitter 23 is reflected by mirror 33. Third laser light L3 reflected by mirror 33 passes through dichroic beam splitter 32. Third laser light L3 having passed through dichroic beam splitter 32 is reflected by dichroic beam splitter 31.

Third laser light L3 reflected by dichroic beam splitter 31 is reflected by mirror 40. Third laser light L3 reflected by mirror 40 passes through objective lens 50 to irradiate sample S. An optical path between dichroic beam splitter 31 and sample S is the same among first laser light L1, second laser light L2, and third laser light L3.

When sample S is irradiated with first laser light L1, first Raman scattered light L4 is generated. The wavelength of first Raman scattered light L4 is defined as a wavelength λ4. Wavelength λ4 is longer than wavelength λ1. First Raman scattered light L4 passes through objective lens 50 and is reflected by mirror 40. First Raman scattered light L4 reflected by mirror 40 passes through dichroic beam splitter 31. Dichroic beam splitter 31 allows each of the light having wavelength λ1 and the light having wavelength λ4 to pass therethrough, and reflects each of the light having wavelength λ2, the light having wavelength λ3, the light having wavelength λ5, and the light having wavelength λ6. First Raman scattered light L4 having passed through dichroic beam splitter 31 passes through dichroic beam splitter 21.

When sample S is irradiated with second laser light L2, second Raman scattered light L5 is generated. The wavelength of second Raman scattered light L5 is defined as a wavelength λ5. Wavelength λ5 is longer than wavelength λ2. Second Raman scattered light L5 passes through objective lens 50 and is reflected by mirror 40. Second Raman scattered light L5 reflected by mirror 40 is reflected by dichroic beam splitter 31. Second Raman scattered light L5 reflected by dichroic beam splitter 31 is reflected by dichroic beam splitter 32. Second Raman scattered light L5 reflected by dichroic beam splitter 32 passes through dichroic beam splitter 22.

When sample S is irradiated with third laser light L3, third Raman scattered light L6 is generated. The wavelength of third Raman scattered light L6 is defined as a wavelength λ6. Wavelength λ6 is longer than wavelength λ3. Third Raman scattered light L6 passes through objective lens 50 and is reflected by mirror 40.
Third Raman scattered light L6 reflected by mirror 40 is reflected by dichroic beam splitter 31. That is, an optical path between sample S and dichroic beam splitter 31 is the same among first Raman scattered light L4, second Raman scattered light L5, and third Raman scattered light L6.

Third Raman scattered light L6 reflected by dichroic beam splitter 31 passes through dichroic beam splitter 32. Dichroic beam splitter 32 allows each of the light having wavelength λ3 and the light having wavelength λ6 to pass therethrough, and reflects each of the light having wavelength λ2 and the light having wavelength λ5. Third Raman scattered light L6 having passed through dichroic beam splitter 32 is reflected by mirror 33. Third Raman scattered light L6 reflected by mirror 33 passes through dichroic beam splitter 23. The optical paths of first Raman scattered light L4, second Raman scattered light L5, and third Raman scattered light L6 after dichroic beam splitter 31 are separated from one another.

Spectrometer 60 has a first channel 60a, a second channel 60b, and a third channel 60c. First Raman scattered light L4 having passed through dichroic beam splitter 21 enters spectrometer 60 via first channel 60a. Second Raman scattered light L5 having passed through dichroic beam splitter 22 enters spectrometer 60 via second channel 60b. Third Raman scattered light L6 having passed through dichroic beam splitter 23 enters spectrometer 60 via third channel 60c.

Spectrometer 60 has a grating 61, a grating 62, and a grating 63. It should be noted that grating 61, grating 62, and grating 63 are not shown. Grating 61, grating 62, and grating 63 are disposed inside spectrometer 60. Spectrometer 60 further has a detector 64. It should be noted that detector 64 is not shown. Detector 64 is disposed inside spectrometer 60.

First Raman scattered light L4 having entered via first channel 60a is dispersed by grating 61 and the intensity distribution thereof is detected by detector 64. Second Raman scattered light L5 having entered via second channel 60b is dispersed by grating 62 and the intensity distribution thereof is detected by detector 64. Third Raman scattered light L6 having entered via third channel 60c is dispersed by grating 63 and the intensity distribution thereof is detected by detector 64.

### <Effects of Microscopic Raman Device 100>

Effects of microscopic Raman device 100 will be described below in comparison with a microscopic Raman device (referred to as "microscopic Raman device 200") according to a comparative example.

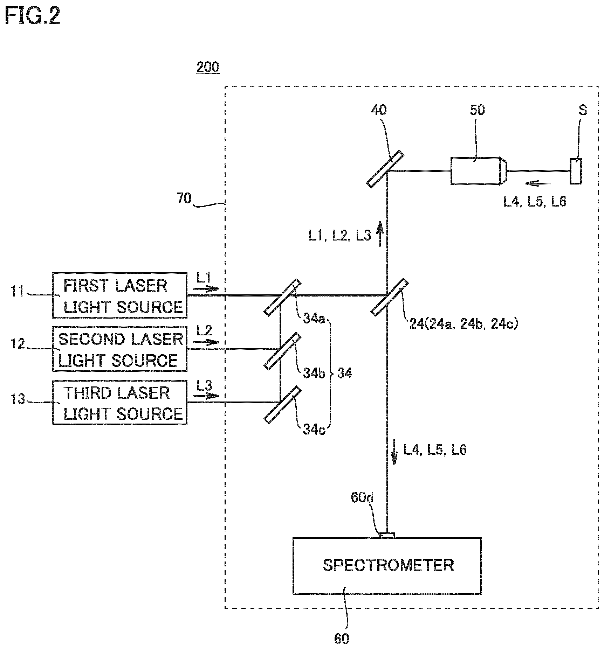

Fig. 2 is a schematic diagram of microscopic Raman device 200. As shown in Fig. 2, microscopic Raman device 200 has a first laser light source 11, a second laser light source 12, and a third laser light source 13, a switching long-pass filter 24, a switching mirror 34, a mirror 40, an objective lens 50, a spectrometer 60, and a housing 70.

Switching long-pass filter 24 has a long-pass filter 24a, a long-pass filter 24b, and a long-pass filter 24c. Switching long-pass filter 24 is used with switching being made to one of long-pass filter 24a, long-pass filter 24b, and long-pass filter 24c. Switching mirror 34 has a mirror 34a, a mirror 34b, and a mirror 34c. In switching mirror 34, each of mirror 34a, mirror 34b, and mirror 34c is switchable to be used or not used.

When first laser light source 11 is used, switching long-pass filter 24 uses long-pass filter 24a, and switching mirror 34 does not use mirror 34a. Thus, first laser light L1 is reflected by long-pass filter 24a and mirror 40 and passes through objective lens 50 to irradiate sample S. First Raman scattered light L4 is reflected by mirror 40, passes through long-pass filter 24a, and enters spectrometer 60 via a channel 60d.

When second laser light source 12 is used, switching long-pass filter 24 uses long-pass filter 24b and switching mirror 34 uses mirror 34a and mirror 34b. Thus, second laser light L2 is reflected by mirror 34b, mirror 34a, long-pass filter 24b, and mirror 40 and passes through objective lens 50 to irradiate sample S. Second Raman scattered light L5 is reflected by mirror 40, passes through long-pass filter 24b, and enters spectrometer 60 via channel 60d.

When third laser light source 13 is used, switching long-pass filter 24 uses long-pass filter 24c and switching mirror 34 uses mirror 34a and mirror 34c and does not use mirror 34b. Thus, third laser light L3 is reflected by mirror 34c, mirror 34a, long-pass filter 24b, and mirror 40 and passes through objective lens 50 to irradiate sample S. Third Raman scattered light L6 is reflected by mirror 40, passes through long-pass filter 24c, and enters spectrometer 60 via channel 60d.

Each of the intensity distributions of first Raman scattered light L4, second Raman scattered light L5, and third Raman scattered light L6 each having entered via channel 60d is detected by detector 64 with switching being made among grating 61, grating 62, and grating 63 for the sake of use.

As described above, in microscopic Raman device 200, when making switching among first laser light source 11, second laser light source 12, and third laser light source 13, switching among long-pass filter 24a, long-pass filter 24b, and long-pass filter 24c and switching among mirror 34a, mirror 34b, and mirror 34c are also made, with the result that the optical axes of long-pass filter 24a, long-pass filter 24b and long-pass filter 24c and the optical axes of mirror 34a, mirror 34b, and mirror 34c may be deviated in response to the switching among first laser light source 11, second laser light source 12, and third laser light source 13.

On the other hand, in microscopic Raman device 100, when making switching among first laser light source 11, second laser light source 12, and third laser light source 13, switching among dichroic beam splitter 21, dichroic beam splitter 22, and dichroic beam splitter 23 and switching among dichroic beam splitter 31, dichroic beam splitter 32, and mirror 33 are unnecessary. Therefore, according to microscopic Raman device 100, the optical axes of dichroic beam splitter 21, dichroic beam splitter 22, and dichroic beam splitter 23 and the optical axes of dichroic beam splitter 31, dichroic beam splitter 32, and mirror 33 can be prevented from being deviated.

In microscopic Raman device 100, since switching among dichroic beam splitter 21, dichroic beam splitter 22, and dichroic beam splitter 23 and switching among dichroic beam splitter 31, dichroic beam splitter 32, and mirror 33 are unnecessary, housing 70 does not need to be opened when making switching among first laser light source 11, second laser light source 12, and third laser light source 13, with the result that laser exposure in response to switching among first laser light source 11, second laser light source 12 and third laser light source 13 can be prevented. In microscopic Raman device 100, switching among grating 61, grating 62, and grating 63 in response to switching among first laser light source 11, second laser light source 12, and third laser light source 13 can be also unnecessary.

### <Modification>

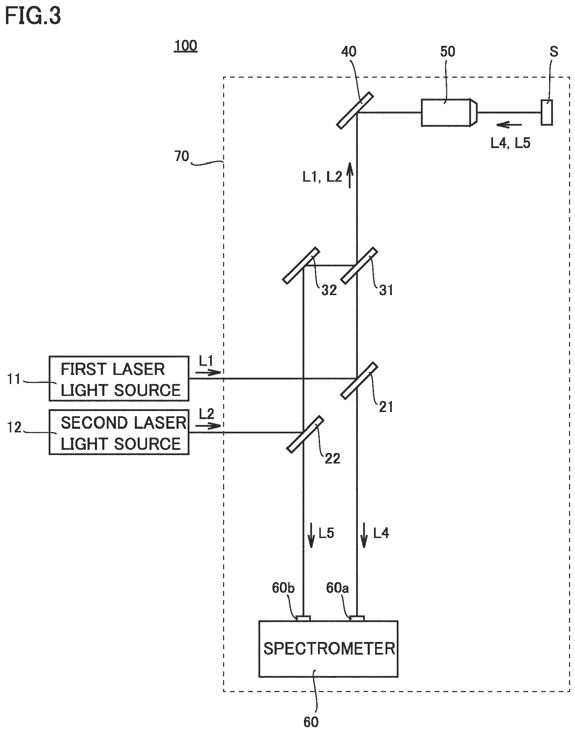

Fig. 3 is a schematic diagram of a microscopic Raman device 100 according to a modification. As shown in Fig. 3, microscopic Raman device 100 may not have third laser light source 13, dichroic beam splitter 23, and mirror 33. In this case, spectrometer 60 may not have third channel 60c. That is, in the above example, the three laser light sources are used, but the number of laser light sources used may be two. The number of laser light sources used may be four or more. It should be noted that in this case, the number of dichroic beam splitters and the number of mirrors may be increased in accordance with the number of laser light sources.

### (Second Embodiment)

A microscopic Raman device according to a second embodiment will be described. Hereinafter, the microscopic Raman device according to the second embodiment will be referred to as a microscopic Raman device 300. Here, differences from microscopic Raman device 100 will be mainly described and the same explanation will not be described repeatedly.

### <Configuration of Microscopic Raman Device 300>

A configuration of microscopic Raman device 300 will be described below.

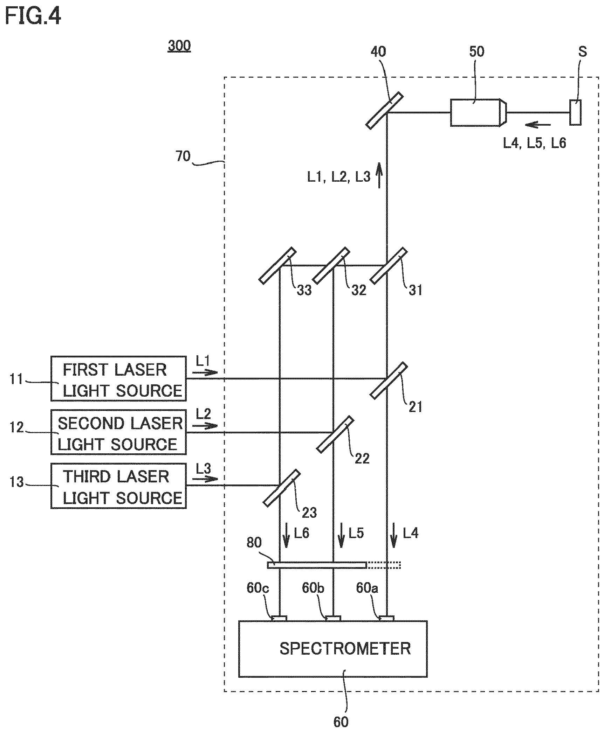

Fig. 4 is a schematic diagram of microscopic Raman device 300. As shown in Fig. 4, microscopic Raman device 300 has a first laser light source 11, a second laser light source 12, a third laser light source 13, a dichroic beam splitter 21, a dichroic beam splitter 22, a dichroic beam splitter 23, a dichroic beam splitter 31, a dichroic beam splitter 32, a mirror 33, a mirror 40, an objective lens 50, a spectrometer 60, and a housing 70. Regarding this point, the configuration of microscopic Raman device 300 is the same as the configuration of microscopic Raman device 100.

Microscopic Raman device 300 further has a shutter 80. Shutter 80 selectively allows for passing of one of first Raman scattered light L4, second Raman scattered light L5, and third Raman scattered light L6. Shutter 80 is disposed, for example, between spectrometer 60 and each of dichroic beam splitter 31, dichroic beam splitter 32, and mirror 33.

Shutter 80 is preferably disposed between spectrometer 60 and each of dichroic beam splitter 21, dichroic beam splitter 22, and dichroic beam splitter 23. That is, shutter 80 preferably selectively allows for passing of one of first Raman scattered light L4 having passed through dichroic beam splitter 21, second Raman scattered light L5 having passed through dichroic beam splitter 22, and third Raman scattered light L6 having passed through dichroic beam splitter 23, thereby causing the light to enter spectrometer 60. Regarding these points, the configuration of microscopic Raman device 300 is different from the configuration of microscopic Raman device 100.

### <Effects of Microscopic Raman Device 300>

Effects of microscopic Raman device 300 will be described below.

When sample S is irradiated with first laser light L1, first anti-Stokes light may be generated from sample S in addition to first Raman scattered light L4. The wavelength of the first anti-Stokes light is shorter than wavelength λ1. Therefore, the first anti-Stokes light may be sequentially reflected by mirror 40, dichroic beam splitter 31, and dichroic beam splitter 32, and may pass through dichroic beam splitter 22 to enter spectrometer 60. Further, the first anti-Stokes light may be sequentially reflected by mirror 40 and dichroic beam splitter 31, may pass through dichroic beam splitter 32, may be reflected by mirror 33, and may pass through dichroic beam splitter 23 to enter spectrometer 60.

When the first anti-Stokes light enters spectrometer 60, not only first Raman scattered light L4 but also the first anti-Stokes light reach detector 64. As a result, the intensity distribution of first Raman scattered light L4 cannot be precisely detected. The same also applies to second anti-stokes light generated when sample S is irradiated with second laser light L2.

On the other hand, in microscopic Raman device 300, shutter 80 selectively allows for passing of one of first Raman scattered light L4, second Raman scattered light L5, and third Raman scattered light L6. Therefore, in microscopic Raman device 300, when first Raman scattered light L4 passes at shutter 80, the first anti-Stokes light is blocked by shutter 80, whereas when second Raman scattered light L5 passes at shutter 80, the second anti-Stokes light is blocked by shutter 80. Therefore, according to microscopic Raman device 300, the intensity distribution of the Raman scattered light from sample S can be more precisely detected.

When shutter 80 selectively allows for passing of first Raman scattered light L4 having passed through dichroic beam splitter 21, second Raman scattered light L5 having passed through dichroic beam splitter 22, and third Raman scattered light L6 having passed through dichroic beam splitter 23, shutter 80 is disposed near spectrometer 60, with the result that stray light can be prevented from entering spectrometer 60.

### (Third Embodiment)

A microscopic Raman device according to a third embodiment will be described. Hereinafter, the microscopic Raman device according to the third embodiment will be referred to as a microscopic Raman device 400. Here, differences from microscopic Raman device 100 will be mainly described and the same explanation will not be described repeatedly.

### <Configuration of Microscopic Raman Device 400>

A configuration of microscopic Raman device 400 will be described below.

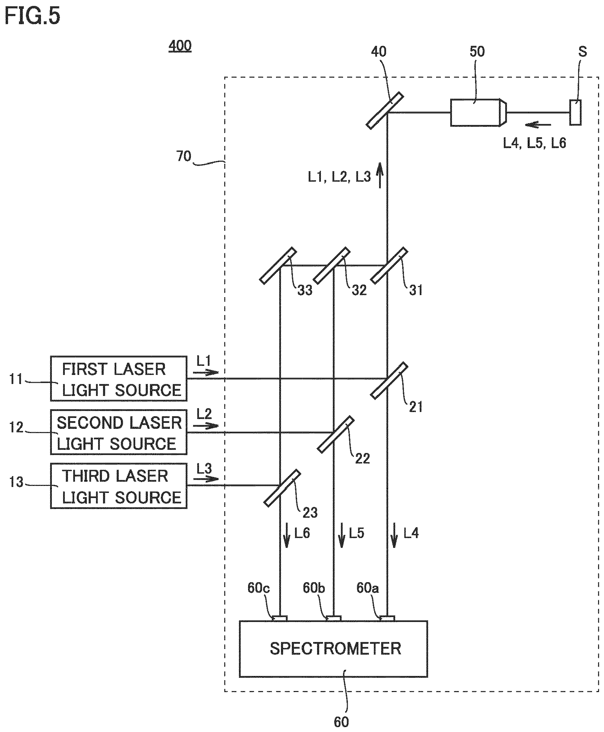

Fig. 5 is a schematic diagram of microscopic Raman device 400. As shown in Fig. 5, microscopic Raman device 400 has a first laser light source 11, a second laser light source 12, a third laser light source 13, a dichroic beam splitter 21, a dichroic beam splitter 22, a dichroic beam splitter 23, a dichroic beam splitter 31, a dichroic beam splitter 32, a mirror 33, a mirror 40, an objective lens 50, a spectrometer 60, and a housing 70. Regarding this point, the configuration of microscopic Raman device 400 is the same as the configuration of microscopic Raman device 100.

In microscopic Raman device 400, one of first Raman scattered light L4, second Raman scattered light L5, and third Raman scattered light L6 is selectively allowed to enter spectrometer 60 by opening or closing first channel 60a, second channel 60b, and third channel 60c. Regarding this point, the configuration of microscopic Raman device 400 is different from the configuration of microscopic Raman device 100.

### <Effects of Microscopic Raman Device 400>

Effects of microscopic Raman device 400 will be described below.

In microscopic Raman device 400, one of first Raman scattered light L4, second Raman scattered light L5, and third Raman scattered light L6 is selectively allowed to enter spectrometer 60 by opening or closing a first channel 60a, a second channel 60b, and a third channel 60c. Therefore, in microscopic Raman device 400, when first Raman scattered light L4 passes through first channel 60a, the first anti-Stokes light is blocked by second channel 60b and third channel 60c, whereas when second Raman scattered light L5 passes through second channel 60b, the second anti-Stokes light is blocked by third channel 60c. Therefore, according to microscopic Raman device 400, the intensity distribution of the Raman scattered light from sample S can be more precisely detected.

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A microscopic Raman device (100, 300, 400) comprising:
a first laser light source (11) that generates first laser light (L1);
a second laser light source (12) that generates second laser light (L2) having a wavelength different from a wavelength of the first laser light;
a first optical element (21);
a second optical element (22);
a third optical element (31);
a fourth optical element (32); and
a spectrometer (60), wherein
when the first laser light is reflected by the first optical element and passes through the third optical element to irradiate a sample (S), first Raman scattered light (L4) is generated from the sample,
when the second laser light is sequentially reflected by the second optical element, the fourth optical element, and the third optical element to irradiate the sample, second Raman scattered light (L5) is generated from the sample,
the first Raman scattered light passes through the third optical element and the first optical element to enter the spectrometer, and
the second Raman scattered light is sequentially reflected by the third optical element and the fourth optical element and passes through the second optical element to enter the spectrometer.

2. The microscopic Raman device according to claim 1, further comprising a shutter (80), wherein
the shutter selectively allows for passing of one of the first Raman scattered light and the second Raman scattered light.

3. The microscopic Raman device according to claim 2, wherein the shutter selectively allows for passing of one of the first Raman scattered light having passed through the first optical element and the second Raman scattered light having passed through the second optical element.

4. The microscopic Raman device according to claim 1, wherein the spectrometer has a first channel (60a) via which the first Raman scattered light enters and a second channel (60b) via which the second Raman scattered light enters, and one of the first Raman scattered light and the second Raman scattered light is selectively allowed to enter the spectrometer by opening or closing the first channel and the second channel.
